# EUROPÄISCHE PATENTSCHRIFT

(11) **EP 4 308 879 B1**
(45) Veröffentlichungstag und Bekanntmachung des Hinweises auf die Patenterteilung: **06.08.2025**
(21) Anmeldenummer: 21714800.6
(22) Anmeldetag: 24.03.2021
(51) Int. Cl.: G01C 15/00, G01C 15/06

(54) **AUFNAHMEVORRICHTUNG UND -VERFAHREN ZUR ERFASSUNG EINES WALDBESTANDS**
RECORDING DEVICE AND RECORDING METHOD FOR MEASURING A FOREST STAND
DISPOSITIF ET PROCÉDÉ D'ENREGISTREMENT POUR LA MESURE D'UN PEUPLEMENT FORESTIER

(30) Priorität: 17.03.2021 AT 501852021
(43) Veröffentlichungstag der Anmeldung: 24.01.2024
(73) Patentinhaber: UMWELTDATA Gesellschaft m.b.H, 3013 Tullnerbach (AT)
(72) Erfinder: Bronner, Günther, 3013 Tullnerbach (AT)
(74) Vertreter: Babeluk Patentanwälte GmbH
(86) Internationale Anmeldenummer: PCT/AT2021/060095
(87) Internationale Veröffentlichungsnummer: WO 2022/192927

(56) Entgegenhaltungen:
- EP-A1- 3 751 231
- WO-A1-2017/066836
- AT-A1- 519 837
- US-A1- 2007 139 262
- US-B1- 8 467 674

## Beschreibung

Die Erfindung betrifft eine Aufnahmevorrichtung sowie ein dazugehöriges Aufnahmeverfahren zur Erfassung eines Waldbestands.

Die Erfassung des Zustands und der Veränderung eines Waldbestands ist schon seit vielen Jahrzehnten Gegenstand der sogenannten Forstinventur. Zur Inventur wurde bisher eine Vermessung der Baumstämme in etwa 1,3 m Höhe durchgeführt, um einen Vergleichswert über die Jahre hinweg zu erhalten und den jährlichen Zuwachs zu ermitteln. Eine genaue Bestimmung des Zuwachses erfordert wegen des langsamen Wachstums der Bäume eine hohe Messgenauigkeit und ist mit hohem Aufwand verbunden.

Eine Ermittlung des Holzvolumens und dessen Zuwachsprognose ist jedoch für wirtschaftliches Arbeiten und die Planung der wirtschaftlichen Nutzung von Waldbeständen von hoher Bedeutung.

Das österreichische Patent des gleichen Anmelders mit der Nummer 519.837 zeigt bereits eine Vorrichtung, die die Erfassung des Waldbestands wesentlich erleichtert und beschleunigt. Dabei wird ein Laserscanner auf einem Stativ mit Schwenkarm angebracht. Dadurch kann die Vermessung von einem Punkt aus auch automatisiert erfolgen. Allerdings ist bei unebenem Gelände, Senken, und dichtem Unterwuchs die Erfassung der einzelnen Stämme als Ganzes nicht möglich, da es durch das Gelände und den Unterwuchs zu Abschattungen kommt und der Fußpunkt des Stammes nicht bestimmt werden kann.

Weitere bekannte Methoden sind beispielsweise die Aufnahme des Waldbestands mit einem Hubschrauber aus der Luft. Dabei ist jedoch das Blätterdach des Waldbestands ein Problem bei der Erfassung. Durch die spärlich erkennbaren Stämme führt diese Methode zu Ungenauigkeiten.

Auch die Aufnahme mit einem Rucksackscanner oder durch Fahrzeugscans ist möglich. Dabei werden von Laserscannern während der Fortbewegung zu Fuß mit dem Rucksack oder bei Fahrt mit einem Aufnahmefahrzeug Aufzeichnungen von der Umgebung gemacht. Durch die Fortbewegung und den sich immer ändernden unbekannten Standpunkt des Laserscanners ist die Zuordnung der einzelnen Aufnahmen zueinander nur mittels aufwendiger Verfahren möglich, die große Rechnerzeiten benötigen. Durch vermischte Perspektiven und andere Fehler kommt es zu Ungenauigkeiten, die bei den geringen Zuwächsen, wie sie bei Bäumen und Sträuchern in der Regel vorkommen, negative Auswirkungen auf die Zuverlässigkeit des Ergebnisses haben. Das erschwert die genaue Bestimmung des Zuwachses.

Weiters ist es anhand dieser Verfahren nahezu unmöglich eine exakte Wiederholung des Aufnahmevorgangs zu erreichen. Da Bäume nur annähernd als rund angesehen werden können, führt oft eine kleine Änderung der Perspektive zur Aufnahme bei der Messung von Baumdurchmessern zu Differenzen im Bereich von mehreren Zentimetern. Da der Zuwachs des Durchmessers in der Regel oftmals nur einige Millimeter groß ist, entstehen hier Fehler, die nicht mehr zumutbar sind und zu sehr unzuverlässigen Aussagen führen.

Das Dokument US8467674 B1 offenbart eine Aufnahmevorrichtung mit den Merkmalen aus dem Oberbegriff des Anspruchs 1.

Aufgabe der vorliegenden Erfindung ist es daher eine Aufnahmevorrichtung und ein Aufnahmeverfahren bereitzustellen, das eine genaue Ermittlung des Zuwachses ermöglicht und die Aufnahmen verbessert.

Diese Aufgabe wird durch eine Aufnahmevorrichtung zur Erfassung eines Waldbestands gemäß Anspruch 1 gelöst. Die Aufnahmevorrichtung umfasst einen Teleskopstab, an dem zumindest ein Laserscanner angeordnet ist, wobei der Laserscanner an einem oberen Ende des Teleskopstabs verortet ist und eine Verankerung an einem gegenüberliegenden unteren Ende des Teleskopstabs vorgesehen ist, die zur Befestigung der Aufnahmevorrichtung in einem Boden bestimmt ist, wobei die Aufnahmevorrichtung eine inertiale Messeinheit (Inertial Measurement Unit, IMU) aufweist und die IMU am oberen Ende des Teleskopstabs in zueinander im Wesentlichen spielloser Anordnung mit dem Laserscanner vorgesehen ist.

Durch die Ausführung der Aufnahmevorrichtung mit einem Laserscanner, der an einem Teleskopstab angeordnet ist, kann die Abschattung durch das Gelände und durch den Unterwuchs mit der Veränderung der Länge des Teleskopstabs und der dadurch erzielbaren höheren Position des Laserscanners umgangen werden. Damit kann eine vollständige Aufnahme auch bei unebenem Gelände und dichtem Unterwuchs erreicht werden. Gemeinsam mit dem Laserscanner ist die IMU vorgesehen, die Rückschlüsse auf die durchgeführte Bewegung zulässt. Die Aufnahmen der Aufnahmevorrichtung können dadurch sehr genau an der jeweiligen Position des Laserscanners zugeordnet werden und eine umfassende Aufnahme des Waldbestandes erstellt werden. Die Verankerung sorgt dafür, dass die Teleskopstange während des Scanvorgangs stabil bleibt und die Bewegung der Aufnahmevorrichtung um einen Fixpunkt erfolgt, der koordinativ ermittelt werden kann und dem auch eine multi-temporale Aufnahmeserie zugeordnet werden kann.

Unter einem Teleskopstab versteht sich hier ein stufenweise oder stufenlos in seiner Länge verstellbarer Stab.

Die eingesetzten Laserscanner sind beispielsweise Solid-State-Laserscanner. Dabei verstehen sich unter Solid-State-Laserscanner, Laserscanner ohne mechanisch bewegte Bauteile. Dabei übernimmt die Bewegung ein sogenannter Mikroscanner, der die Abtastung ohne mechanische Verdrehung übernimmt, beispielsweise piezoelektrisch oder auf andere nicht mechanische Art und Weise.

Es können auch herkömmliche Laserscanner mit mechanisch rotierenden Laser eingesetzt werden. Auch der Einsatz von Flash-Lidar ist möglich. Bei Flash-Lidar wird eine Matrix von mehreren tausend Aufnahmepunkten wie bei einer Fotografie zeitgleich erfasst anstatt die Punkte sequenziell abzuarbeiten wie bisher.

Um einen Fixpunkt zur Bestimmung eines Ursprungs bereitzustellen, wird eine Verankerung zur festen Verbindung mit dem Boden eingesetzt. Die Verankerung kann dabei durch einen Erdspieß oder Ähnliches realisiert sein.

Aus der Robotik sind zur Bestimmung der Trajektorie und der genauen Position eines Roboters mehrere Verfahren bekannt. Das Verfahren zur Positionsbestimmung und zur gleichzeitigen Aufzeichnung der Umgebung wird im Allgemeinen als SLAM-Verfahren bezeichnet, wobei SLAM eine Abkürzung für Simultaneous Localization and Mapping ist. Während der Bewegung und auch während des Stillstands werden die Aufnahmen der Umgebung durchgeführt. Durch die Aufnahmen wird eine Karte der Umgebung erstellt. Im vorliegenden Fall wird eine dreidimensionale Aufnahme der Bäume, Sträucher und des Waldbodens in der Umgebung angefertigt. Aus den sich überlappenden Aufnahmen werden in hoher zeitlicher Auflösung die Position und die Ausrichtung der Aufnahmevorrichtung rückgerechnet. Diese Berechnung ist notwendig, da über GNSS (Global Navigation Satellite System) die Position nicht hinreichend genau bestimmt werden kann.

Außerdem wird diese Aufgabe durch ein Aufnahmeverfahren zur Erfassung eines Waldbestands gemäß Anspruch 11 gelöst. Der Laserscanner nimmt Aufnahmen in der ersten Höhe auf. Je nach Orientierung auf dem Teleskopstab und je nach Art des Laserscanners wird die Umgebung aufgenommen. So kann beispielsweise ein rotierender Laserscanner oder ein Solid-State-Laserscanner 360° rundum Aufnahmen in einem Punkt erstellen. Alternativ kann ein feststehender exzentrisch angeordneter und nach außen weisender Laserscanner durch die Drehung in der unregelmäßigen Form 360° rundum aufnehmen.

Durch die unregelmäßige oder zumindest nicht exakt kreisförmige Bewegung der Aufnahmevorrichtung wird der Laserscanner in unterschiedlichen Abständen zu dem Boden bewegt. Der Laserscanner kann dadurch die Aufnahme von im Vordergrund befindlichen Bäumen, Unebenheiten und Unterwuchs umgehen und dadurch können Abschattungen durch Bäume vermieden werden. Okklusionen werden dadurch reduziert.

Besonders vorteilhaft ist es, wenn die Aufnahmevorrichtung derart verschwenkt wird, dass das obere Ende mit dem Laserscanner eine im Wesentlichen achterförmige Bahn beschreibt.

Aus den Messungen der IMU und den Aufnahmen werden mittels SLAM-Verfahren dreidimensionale Aufnahmen des Waldbestands generiert. Dies wird vorzugsweise als Offline-Siam aus den Aufnahmen durchgeführt.

Durch die gemeinsame Verbauung von IMU und Laserscanner in einem spiellosen Verband, wird über die IMU die Bewegung des Laserscanners bestimmt. Dabei besteht die IMU aus Initialsensoren.

Erfindungsgemäß weist der Teleskopstab ein Gelenk auf, das zur Verschwenkung des oberen Endes mit dem Laserscanner gegenüber der Verankerung dient, wobei das Gelenk vorzugsweise ein Kugelgelenk, ein Kreuzgelenk und/oder ein Federelement und/oder ein Radiallager aufweist. Dieses Gelenk dient dazu, dass die Aufnahmevorrichtung in der Verankerung zentriert ist und bleibt. Der Teleskopstab kann über das Gelenk mit dem oberen Ende mit dem Laserscanner verschwenkt werden, ohne dass sich die Verankerung im Boden löst oder der Spielraum im Boden erweitert wird und dadurch das Zentrum verloren wird. Außerdem kann somit auch ein Kippen bzw. ein Fallen des Teleskopstabs aus der Verankerung verhindert werden.

Ohne das Gelenk würde der Teleskopstab entweder im Boden rotieren oder im Boden verschwenkt werden und in weiterer Folge aus der Verankerung ausreißen und den Fixpunkt verlieren.

Um Abschattungen der Stämme in Bodennähe noch weiter zu verringen und zum besseren Überblicken von Senken ist es günstig, wenn der Teleskopstab eine Länge - vorzugsweise in einem ausgezogenen Zustand - von zumindest 3 m aufweist, bevorzugt eine Länge von zumindest 5 m aufweist.

Um die Aufnahmen der Aufnahmevorrichtung weiter verbessern zu können, ist es günstig, wenn am oberen Ende des Teleskopstabs neben dem Laserscanner eine Kamera vorgesehen ist, wobei der Laserscanner und die Kamera vorzugsweise jeweils einen Aufnahmebereich erfassen und die beiden Aufnahmebereiche einander im Wesentlichen entsprechen.

Zur schnelleren und unkomplizierten Verarbeitung sowie um eine direkte Speicherung an der Aufnahmevorrichtung zu ermöglichen, ist es vorgesehen, dass zu den Messaufnehmern zusätzliche Komponenten an der Aufnahmevorrichtung vorgesehen sind, wobei diese zusätzlichen Komponenten beispielsweise ein Prozessor, ein Datenspeicher, ein Energiespeicher zur Versorgung der Aufnahmevorrichtung mit Energie, und Ähnliches sind. Als Messaufnehmer verstehen sich hier Kamera, Laserscanner und IMU.

Eine benutzerfreundlichere und praktischere Aufnahmevorrichtung entsteht, wenn alle zu den Messaufnehmern zusätzlichen Komponenten, am unteren Ende des Teleskopstabs - vorzugsweise im Inneren des Teleskopstabs - angeordnet sind. Diese Maßnahme sorgt dafür, dass der Schwerpunkt tiefer liegt und daher der Teleskopstab einfacher bewegt werden kann und der Anwender weniger Kraft aufwenden muss.

Zur leichteren Handhabung und zur Vermeidung von Verknotungen im Kabel bzw. in den umliegenden Ästen ist in einer günstigen Ausführung vorgesehen, dass im Inneren des Teleskopstabs zumindest ein Kabel - vorzugsweise ein Spiralkabel vorgesehen ist. Durch das Vorsehen eines Kabels zur Verbindung der einzelnen Geräte der Aufnahmevorrichtung können wesentliche Elemente auch vom Laserscanner und der IMU entfernt an der Aufnahmevorrichtung angeordnet werden. Auch das erleichtert die Verlegung des Schwerpunkts zum unteren Ende hin.

Um Gewicht einzusparen, ist es günstig, wenn der Teleskopstab in Leichtbauweise - vorzugsweise mit CFK - Rohren - ausgeführt ist. Dadurch muss weniger Gewicht verschwenkt werden, was wiederum zu höherer Benutzerfreundlichkeit führt.

Es ist vorteilhaft, wenn die Verankerung eine - vorzugsweise abnehmbare - Spitze zum Einbringen in den Boden aufweist. Diese Spitze kann beispielsweise als klassischer Erdspieß ausgeführt sein.

Alternativ ist vorgesehen, dass die Verankerung zur Verbindung mit einem Gegenstück im Boden verbindbar ist, vorzugsweise über einen Bajonettverschluss, einen Schnappverschluss, ein Gewinde oder einen Gummipfropfen. Dadurch kann das Gegenstück im Boden fix vorgesehen sein und ist damit vortrefflich für periodisch wiederkehrende Aufnahmen geeignet. Dadurch wird auf einfache Weise ein Referenzpunkt zu Zuordnung der Aufnahmen bereitgestellt und die Zuordnung kann einfacher und schneller erfolgen. Der Gummipfropfen wird dazu in die Teleskopstange eingepresst und in zusammengedrücktem Zustand in ein festes Rohr im Boden eingebracht. Im Rohr expandiert der Gummipfropfen und sorgt so für eine gute Verankerung.

Um Aufnahmen direkt zur Weiterverarbeitung übermitteln zu können ist in einer alternativen Ausführung zumindest eine Sendeeinheit vorgesehen, die zur Übermittlung von Aufnahmen von der Sendeeinheit an einen von dem Laserscanner entfernt angeordneten Empfänger dient. Dieser Empfänger ist zum Beispiel als Recheneinheit (Laptop, Smartphone, Tablet, PC oder Ähnliches) ausgeführt. Die Recheneinheit führt bevorzugterweise das Softwarepaket zur Auswertung aus.

Es ist besonders vorteilhaft, wenn IMU und ein Prozessor miteinander verbunden sind und mit dem Prozessor zumindest ein Signalelement verbunden ist, wobei das Signalelement zur Ausgabe eines - vorzugsweise akustischen oder haptischen - Feedbacks vorgesehen ist, das die Brauchbarkeit der Aufnahmen für den Anwender bewertet und dem Anwender zeigt, ob die Verschwenkung zu schnell oder zu langsam ausgeführt wird. Dabei ist dieses Signalelement, beispielsweise als Lampe zur Ausgabe von optischen Signalen oder als Glocke zur Ausgabe von akustischen Signalen oder Ähnliches ausgeführt.

Dabei werden Daten von der IMU und die Aufnahmen des Laserscanners in Echtzeit ausgewertet, dass beinahe im selben Moment eine Rückmeldung über der Brauchbarkeit der Aufnahmen gegeben werden kann. Beispielsweise könnte bei zu schneller Bewegung durch ein Signalelement ein haptisches Feedback ausgegeben werden, wie beispielsweise dauerhafte Vibration. Bei Erreichen der richtigen Geschwindigkeit könnte ein kurzes Vibrieren zu spüren sein, um die Schranke zwischen zu langsamer und ausreichend schneller Bewegung für den Anwender zu markieren.

Dazu ist in einem bevorzugten Aufnahmeverfahren vorgesehen, dass die IMU in Echtzeit ausgewertet wird und ein Feedback ausgegeben wird - vorzugsweise akustisch oder haptisch - dass die Brauchbarkeit der Aufnahmen für den Anwender bewertet und dem Anwender zeigt, ob die Verschwenkung zu schnell oder zu langsam ausgeführt wird.

In einer vorteilhaften Ausführung ist ein System mit einem Smartphone und einer Aufnahmevorrichtung wie oben angeführt vorgesehen, wobei das Smartphone den zumindest einen Laserscanner und die IMU aufweist und in einer Halterung am Ende des Teleskopstabs der Aufnahmevorrichtung angeordnet ist. Derzeit sind die bei Smartphones eingesetzten Laserscanner noch nicht zu derartigen Aufnahmen in der Lage, aber ein zukünftiges besonderes Smartphone mit einem verbesserten Laserscanner und einer genauen IMU könnte zur Aufnahme eines Waldbestands herangezogen werden.

Um Abschattungen nahezu zu eliminieren ist es günstig, wenn während der Messung eine Verdrehung der mit dem Ende des Teleskopstabs beschriebenen Figur erfolgt. Beispielsweise ist durch das Bewegen des oberen Endes des Teleskopstabs in einer Achterfigur die Entfernung an dem oberen Ende des Achters und an dem gegenüberliegenden Ende des Achters der Laserscanner maximal weit vom Fixpunkt entfernt. Dadurch kann die Aufnahmevorrichtung an im Vordergrund stehende Bäume vorbei Aufnahmen anfertigen. Durch Drehung der flachen Figur kann dieser Effekt in mehrere Richtungen perfekt ausgenutzt werden und eine besonders gute 360° umfassende Aufnahme gemacht werden.

Es ist günstig, wenn die Figur nach einem Aufnahmedurchgang horizontal um etwa 30° bis 45° verdreht wird. Dadurch werden zuerst verdeckte Bäume in den weiteren Aufnahmen sichtbar.

Um diesen Effekt auch für Senken und Unebenheiten sowie Unterwuchs zu erreichen ist es günstig, wenn zumindest eine weitere Messung auf einer weiteren Höhe durchgeführt wird, die unterschiedlich zur ersten Höhe ist, wobei dazu vorzugsweise die Länge des Teleskopstabs verändert wird.

Um die blinden Flecken weiter zu minimieren, ist es günstig, wenn es vorgesehen ist, dass die mit dem oberen Ende des Teleskopstabs mit dem Laserscanner durchfahrene Figur die größtmögliche Fläche umschließt. Das heißt der Anwender sollte möglichst den Bewegungsumfang des Gelenks oder den Bewegungsumfang seiner Arme ausnutzen.

Zur besseren Zuordnung der einzelnen Aufnahmen zueinander ist es günstig, wenn eine Lokalisierung des Laserscanners durchgeführt wird, vorzugsweise durch SLAM-Algorithmen unter Nutzung der Auswertung der IMU.

Dadurch können die Aufnahmen in weiterer Folge in ihrer Qualität und in ihrer Reproduzierbarkeit verbessert werden. So ist es einfacher möglich ähnliche Aufnahmen in periodischen Zeitabständen herzustellen und Vergleiche über den jährlichen Zuwachs an Biomasse anzustellen.

Besonders vorteilhaft ist es, wenn als SLAM-Algorithmus ein Matching von zylindrischen Elementen verwendet wird, die durch die Lage von Zylinderachsen und von Zylinderdurchmessern bestimmt sind und somit Abschnitte von Stämmen und Ästen beschreiben können. Dieses Matching-Verfahren ist besser für die Anwendung im Forstbestand geeignet als ein Plane-to-Plane Matching, da im Forstbestand selten Objekte mit ebenen Flächen anzutreffen sind.

In weiterer Folge wird die Erfindung anhand der nicht einschränkenden Ausführungsbeispiele in Figuren näher erläutert.

Die Richtungsangaben oben und unten werden hier für eine bevorzugte Verwendungslage benutzt, in der die Vorrichtung Bilder und Daten aufnimmt und Vermessungen vornimmt. Dies soll in keiner Weise einschränkend auf die Aufnahmevorrichtung wirken. So kann in horizontaler Ausrichtung eines Teleskopstabs ein unteres Ende und ein oberes Ende durch die geeignete Verwendungslage identifiziert werden. Das untere Ende befindet sich in Verwendungslage bodenseitig.

Es zeigen:
- Fig. 1: schematisch einen Anwender bei Ausführung eines erfindungsgemäßen Verfahrens mit einer erfindungsgemäßen Aufnahmevorrichtung;
- Fig. 2: ein Ablaufdiagramm des erfindungsgemäßen Aufnahmeverfahrens;
- Fig. 3: ein Detail einer ersten Ausführungsvariante einer erfindungsgemäßen Aufnahmevorrichtung;
- Fig. 4: ein Detail einer zweiten Ausführung einer erfindungsgemäßen Aufnahmevorrichtung;
- Fig. 5: eine dritte Ausführungsvariante einer erfindungsgemäßen Aufnahmevorrichtung;
- Fig. 6: ein Detail einer vierten Ausführungsvariante einer erfindungsgemäßen Aufnahmevorrichtung;
- Fig. 7: ein erstes mögliches Bewegungsschema für das erfindungsgemäße Aufnahmeverfahren,
- Fig. 8: ein zweites mögliches Bewegungsschema für das erfindungsgemäße Aufnahmeverfahren, und
- Fig. 9: ein drittes mögliches Bewegungsschema für das erfindungsgemäße Aufnahmeverfahren.

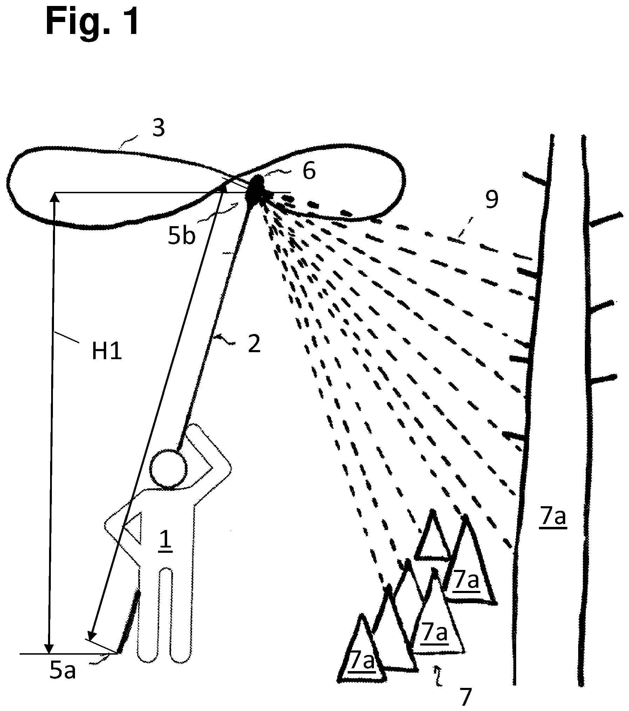

In Fig. 1 ist ein Anwender 1 bei der Ausführung eines erfindungsgemäßen Aufnahmeverfahrens mit einer erfindungsgemäßen Aufnahmevorrichtung 2 gezeigt. Dabei verschwenkt der Anwender 1 die Aufnahmevorrichtung 2 entlang einer Bahn 3, die hier in der gezeigten Darstellung die Form einer Lemniskate aufweist. Der Anwender 1 bewegt dazu seine Arme von einer Seite, soweit es ihm möglich ist, zur gegenüberliegenden Seite. Die Bewegung ist möglichst ausladend auszuführen und die Bahn 3 sollte einen möglichst großen Bereich umschließen, das heißt, die Fläche innerhalb der Bahn 3 sollte maximal sein.

Die Aufnahmevorrichtung 2 ist als Teleskopstab 4 ausgestaltet, der ein unteres Ende 5a und ein oberes Ende 5b aufweist. Das obere Ende 5b durchfährt die Bahn 3. Ein Laserscanner 6 ist an dem oberen Ende 5b zur Aufnahme angeordnet.

Der Teleskopstab 4 ist in einer günstigen Ausführungsform aus kohlenstofffaserverstärktem Kunststoff (CFK) gefertigt, um möglichst Gewicht einzusparen und für den Anwender handlich zu sein.

Zur Aufnahme eines Waldbestandes 7 wird an einem bestimmten Punkt im Waldbestand 7 die Aufnahmevorrichtung 2 vom Anwender 1 platziert.

Dazu wird ein unteres Ende 5a der Aufnahmevorrichtung 2 in einem Boden 8 fixiert. Diese Fixierung kann auf verschiedenste Arten realisiert werden, die weiter unten genauer ausgeführt werden.

Mit Bezugszeichen 9 sind die Laserstrahlen des Laserscanners 6 angedeutet. Durch Reflektion der Laserstrahlen 9 von Bäumen 7a und Ähnlichem und Laufzeitmessung dieser Laserstrahlen 9 wird die Entfernung einzelner umliegender Bäume 7a und Sträucher oder Gegenstände bestimmt. Dadurch werden Punktwolken ermittelt, die durch weitere Verarbeitung in einem nächsten Schritt zu einer genauen Aufnahme des Waldbestandes 7 verarbeitet werden können.

Wenn zu wenig Raum zur Verschwenkung der Aufnahmevorrichtung 2 vorhanden ist, so ist es möglich die Bahn 3 kleiner auszuführen. Alternativ kann die Bahn 3 eine andere Form aufweisen. Dabei ist wesentlich, dass die Bahn 3 nicht kreisrund ist, um eine Drift der IMU zu vermeiden. Die Bahn 3 kann beispielsweise dreieckig, sternförmig oder eine Zick-zack-Bahn sein. Umso mehr Abweichungen von einer regelmäßigen Form die Bahn 3 aufweist, umso besser sind die Aufnahmen, da Abschattungen vermieden werden und die IMU Nullpunktdrifte ausgleichen kann.

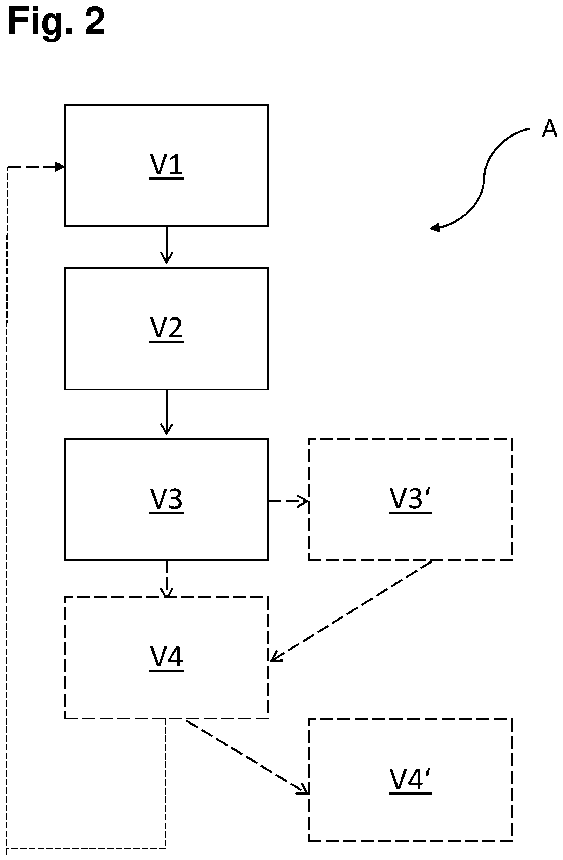

Fig. 2 zeigt einen ersten möglichen Verfahrensablauf eines Aufnahmeverfahrens A: Das Aufnahmeverfahren A zur Erfassung eines Forstbestands 7 mit einer Aufnahmevorrichtung 2 umfasst einen ersten Verfahrensschritt V1, der das Einbringen der Verankerung 10 in den Boden 8 betrifft, einen zweiten Verfahrensschritt V2, der das Fassen des Teleskopstabs 4 durch einen Anwender 1; und einen dritten Verfahrensschritt V3, der das Durchführen einer Messung mit dem zumindest einen Laserscanner 6 in einer ersten Höhe H1 vorschreibt. Dabei wird im dritten Verfahrensschritt V3 die Aufnahmevorrichtung 2 mit dem oberen Ende 5b derart verschwenkt, dass das obere Ende 5b des Teleskopstabs 4 mit dem Laserscanner 6 eine Figur beschreibt. Zum Ausgleichen einer Drift eines bestimmten Inertialsystems muss die Figur unregelmäßig oder darf zumindest nicht kreisförmig sein. Optional wird die Aufnahmevorrichtung 2 derart verschwenkt, dass das obere Ende 5b mit dem Laserscanner 6 eine im Wesentlichen achterförmige Bahn 3 beschreibt.

Dabei verschwenkt der Anwender 1 den Teleskopstab 4 vorzugsweise durch Bewegung seiner Arme in gleichmäßigen abwechselnd mit beiden Armen in etwa horizontalen ausholenden Bewegungen.

Das Einbringen der Verankerung 10 kann der eigentlichen Messung dabei weit vorgelagert sein. So umfasst das Anbringen der Verankerung 10 sowohl das Einrammen einer Spitze in den Boden 8 als auch das Einbringen des unteren Endes 5a der Aufnahmevorrichtung 2 in einer bereits vorabangebrachten und/oder fest im Boden 8 verbleibenden Aufnahme. Dabei ist diese Aufnahme das Gegenstück des unteren Endes 5a der Aufnahmevorrichtung 2.

Die Verankerung 10 im Boden 8 kann auf vielfache dem Fachmann bekannte Weisen realisiert werden. So ist auch eine Verbindung einer Hülse oder eines Rohrs über einen Bajonett- oder einen Schnappverschluss möglich.

Die Verankerung 10 im Boden 8 ist günstig, da über sie eine Zwangszentrierung bei Verschwenkung erfolgt.

Optional kann nun vorgesehen sein, dass während der Messung eine Verdrehung der mit dem Ende 5b des Teleskopstabs 4 beschriebenen Figur, nämlich der Bahn 3 erfolgt. Dies entspricht hier einer optionalen Erweiterung des dritten Verfahrensschritts V3'.

Dabei kann die Bahn, die beispielsweise einer Lemniskate entspricht, vorzugsweise in ihrem Ursprung um einen bestimmten Winkel verdreht werden. Dieser Winkel kann beispielsweise 30°, 45° oder 90° betragen. Dadurch kann der Blickpunkt des Laserscanners 6 auf die aufzunehmende Umgebung ausreichend verändert werden. Dies dient dazu Abschattungen zu reduzieren und eine umfassendere und vollständigere Aufnahme zu erreichen.

Um die Aufnahme weiter zu verbessern ist vorteilhafterweise ein weiterer Messschritt, ein vierter Verfahrensschritt V4 vorgesehen, bei dem eine Länge L der Teleskopstange 4 verändert wird und dadurch die Höhe - in der die Messung durchgeführt wird - verändert und die Messung in dieser neuen Höhe erneut angestellt. So wird die Höhe von der ersten Höhe H1 zu zumindest einer weiteren Höhe H2 verändert. Dieser Schritt kann beliebig oft durchgeführt werden.

Die bevorzugte Länge L in der ersten Höhe ist beispielsweise 3 m und die Länge L in der zweiten Höhe H2 ist vorteilhafterweise etwa 5 m. Der Teleskopstab 4 kann entweder stufenlos oder in Stufen verstellbar sein. Besonders vorteilhaft ist es, wenn eine Grundlänge des Teleskopstabs 4 1,6 m beträgt und die maximale Länge L des Teleskopstabs 4 5,8 m oder 5 m beträgt. Unter der Grundlänge versteht sich hier die Länge L, in der die Aufnahmevorrichtung 2 für Transportzwecke auf ihre minimale Länge eingeschoben ist. Für die Aufnahme kann der Teleskopstab 4 ausgezogen auf seine erste Auszugslänge 3 m lang sein. Günstig wird dies erreicht, wenn vier Segmente vorgesehen sind, die je Segment eine um 10 cm verringerte Auszugslänge aufweisen, zum Beispiel eine Auszugslänge des ersten Segments von 1,6 m, des zweiten Segments von 1,5 m, des dritten Segments von 1,4 m und des vierten Segments von 1,3 m. So ergäbe sich in diesem Fall eine Gesamtlänge von 5,8 m.

Dieser Messschritt ist nicht zwingend nötig, er dient dazu die Aufnahme weiter zu optimieren.

Der vierte Verfahrensschritt V4 kann entweder direkt nach der einmaligen Messung V3 mit einer in einer Richtung durchgefahrenen Bahn 3 durchgeführt werden oder nach Drehung der Bahn 3 in der Erweiterung des dritten Verfahrensschritt V3 mit dem optionalen Verfahrensschritt V3'.

Auch in der neuen Höhe H2 ist es möglich, die Bahn 3 zu drehen und so zu einem optionalen abgewandelten erweiterten vierten Verfahrensschritt V4' abzuarbeiten.

Die neue Länge der Teleskopstange 4 ist durch Verlängerung oder Verkürzung erzielbar.

Es ist bei jeder Messung vorteilhaft, wenn die mit dem Laserscanner 6 durchfahrene Bahn 3 und die sich damit ergebende Figur die größtmögliche Fläche umschließt.

Es trägt zur Verbesserung der Aufnahme bei, wenn die IMU in Echtzeit ausgewertet wird und ein Feedback ausgegeben wird - vorzugsweise akustisch oder haptisch - das die Brauchbarkeit der Aufnahmen für den Anwender 1 bewertet, und dem Anwender 1 zeigt, ob die Verschwenkung zu schnell oder zu langsam ausgeführt wird.

Das Aufnahmeverfahren A kann weitergeführt werden, indem wiederum die Bahn 3 verdreht wird, oder die Höhe verändert wird. Diese Schritte können beliebig oft und in beliebiger Abfolge abgearbeitet werden.

Außerdem ist es möglich, dass der Messpunkt gewechselt wird. Dazu wird die Aufnahmevorrichtung 2 aus dem Boden 8 entfernt und in einem vom ersten Punkt unterschiedlichen zweiten Punkt erneut befestigt und das Aufnahmeverfahren setzt nach dem ersten Verfahrensschritt V1 fort.

Weiters kann von der Aufnahmevorrichtung 2 eine Übergabe an beispielsweise eine Recheneinheit erfolgen. Dazu werden die aufgenommenen Daten an die Recheneinheit gesendet. Dies kann entweder durch Versenden über beispielsweise Bluetooth (Long Range Bluetooth), über eine WLAN-Verbindung, per Funk oder über eine physische Verbindung erfolgen. Alternativ können die Daten auf einer Speicherkarte abgelegt werden und zur Auswertung wird die Speicherkarte aus der Aufnahmevorrichtung entfernt und an einem Rechengerät ausgelesen und weiterverarbeitet.

Es wird optional eine Lokalisierung des Laserscanners 6 durchgeführt, vorzugsweise durch SLAM-Algorithmen unter Zuhilfenahme der Auswertung der IMU.

Diese Lokalisierung kann entweder online oder bei Auswertung der während der Messung aufgenommen Daten durchgeführt werden. Fakultativ kann eine Lokalisierung auch über GNSS unterstützt werden.

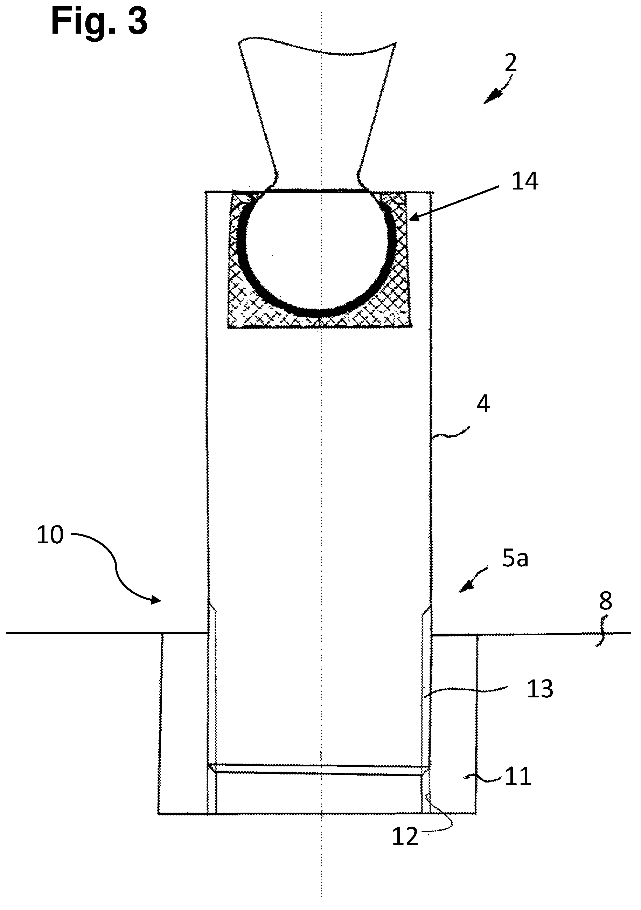

Fig. 3 zeigt das untere Ende 5a einer beispielhaften Ausführung des Teleskopstabs 4 der Aufnahmevorrichtung 2. Dabei ist eine Verankerung 10 im Boden 8 zur Fixierung der Aufnahmevorrichtung 2 vorgesehen. Die Verankerung 10 ist hier derart realisiert, dass im Boden 8 ein Gegenstück zum unteren Ende 5a vorgesehen ist. Hier ist das Gegenstück als Hülse 11 mit einem Innengewinde 12 ausgebildet. Das untere Ende 5a ist als Außengewinde 13 ausgebildet. Das Außengewinde 13 und das Innengewinde 12 sind dabei aufeinander abgestimmt.

Die Hülse 11 ist in dem Boden 8 befestigt und bei Durchführung des Aufnahmeverfahrens A wird vom Anwender 1 die Aufnahmevorrichtung 2 im ersten Verfahrensschritt V1 mit dem unteren Ende 5a in die Hülse 11 eingeschraubt.

Die Hülse 11 kann beispielsweise im Boden 8 eingeschlagen sein, sie kann in einem Fundament eingebettet sein oder in einem Gesteinsbrocken eingeklebt sein.

Dabei bildet die Hülse 11 ein Gegenstück im Boden 8 für das untere Ende 5a mit der die Verankerung 10 der Aufnahmevorrichtung 2 bildbar ist. Die Verbindung kann vorzugsweise über einen Bajonettverschluss, einen Schnappverschluss, ein Gewinde 12, 13, wie hier dargestellt ausgeformt sein oder auch durch einen eingepressten Gummipfropfen, der von innen an ein im Boden 8 befindliches Rohr gedrückt wird, ausgestaltet sein.

Der Teleskopstab 4 weist vom unteren Ende 5a abgewandt ein Gelenk auf, welches in Fig. 3 als Kugelgelenk 14 ausgeführt ist. Durch dieses Kugelgelenk 14 ist es einfacher für den Anwender 1 die Verschwenkung des Teleskopstabs 4 durchzuführen. Der Teleskopstab 4 ist dann vorzugsweise am Teil mit dem oberen Ende 5b teleskopisch. Es wird jedoch auch der Teil im Bereich des unteren Ende 5a mit dem Teleskopstab 4 mitverstanden. Dieser Teil kann ebenfalls teleskopisch konstruiert sein. Strenggenommen, wären dann zwei Teleskopstäbe mit einem Kugelgelenk 14 oder einem anderen Gelenk verbunden oder aber ein Teleskopstab mit einem Stab verbunden. Diese Ausführungsformen sind mit der Bezeichnung Teleskopstab 4 mitgemeint.

In einer bevorzugten Ausführung ist dieser Teleskopstab 4 annähernd durchgehend hohl, sodass zumindest ein Kabel durchgeführt werden kann. Dieses Kabel dient dazu, die Komponenten an dem oberen Ende 5b mit dem unteren Ende 5a zu verbinden. Dieses Kabel ist zur besseren Übersicht in den Figuren nicht eingezeichnet. Es ist vorzugsweise als Spiralkabel ausgeführt, sodass es das Ausziehen des Teleskopstabs 4 ermöglicht.

In weiterer Folge werden weitere Ausführungen beschrieben. Dabei weisen Bauteile mit gleichem Bezugszeichen gleiche Funktion auf und es werden nur die Unterschiede und Besonderheiten der jeweiligen Ausführungsvariante beschrieben.

Die Funktionsweise und die Eignung der einzelnen Ausführungsvarianten zur Durchführung des Aufnahmeverfahrens sind in allen Ausführungen gleich.

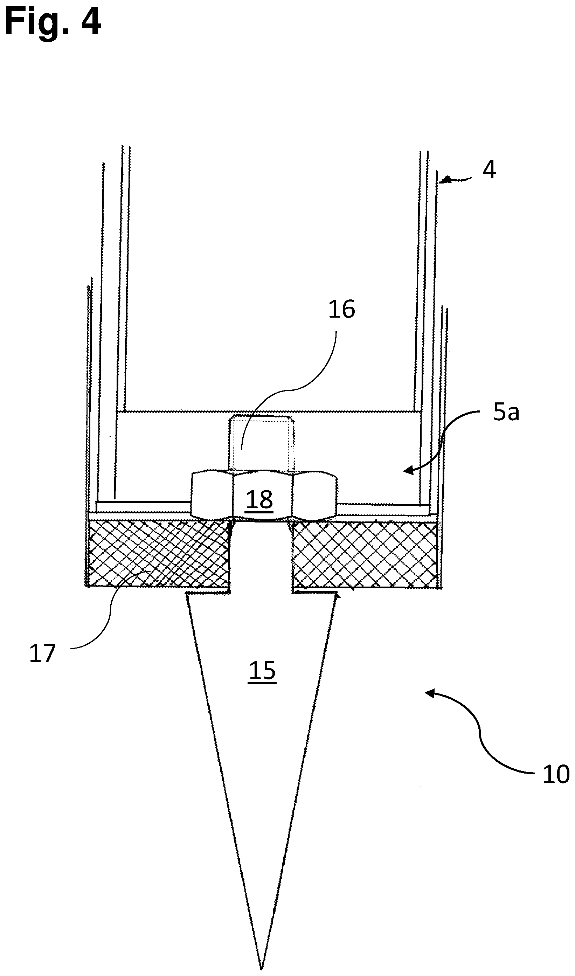

In Fig. 4 ist eine alternative Ausführung gezeigt. Diese Ausführung umfasst eine Verankerung 10, die durch einen Erdspieß 15 gebildet wird.

Hier ist der Erdspieß 15 mit einem Gewindestück 16 kombiniert, das in der Ausnehmung eines nachgiebigen elastischen Elements 17 steckt und durch eine Mutter 18 gegenüber des Erdspießes 15 fixiert wird. Gemeinsam bildet dieses Gewindestück 16 mit dem elastischem Element 17 und der Mutter 18 ein Gelenk zur einfacheren Verschwenkung der Aufnahmevorrichtung 2.

Das elastische Element 17 ist im unteren Ende 5a des Teleskopstabs 4 fixiert. Dabei kann das elastische Element 17 beispielsweise durch Gummi oder durch ein Elastomer gebildet sein. Dieses elastische Element 17 kann durch einen Pressverband, durch Verkleben oder sonstige Fixierung mit dem Teleskopstab 4 fest verbunden sein. Weiters kann in beide Achsrichtungen des Teleskopstabs 4 eine Sicherung gegen das Lösen und das Verrutschen vorgesehen sein.

Es ist möglich, dass sich der Teleskopstab 4 gegenüber der Verankerung 10 verdrehen lässt.

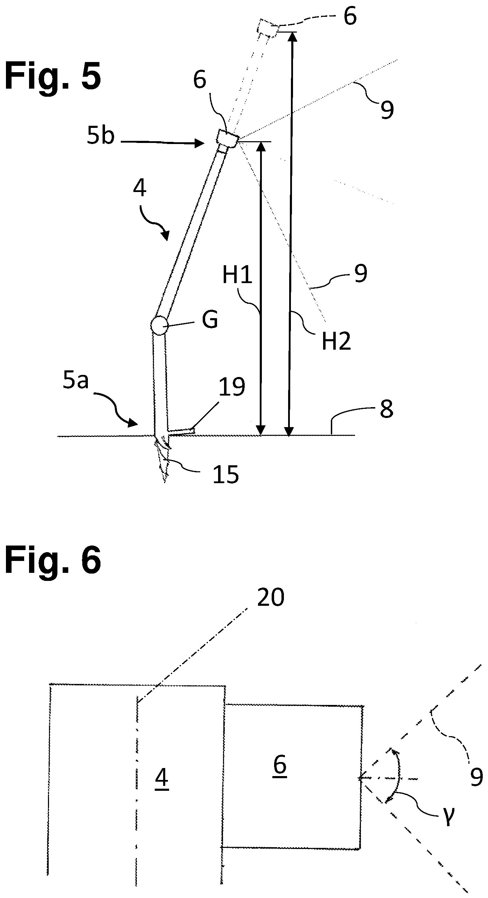

Fig. 5 zeigt eine dritte Ausführung der Aufnahmevorrichtung 2. Dabei ist am unteren Ende 5a des Teleskopstabs 4 ebenfalls ein Erdspieß 15 vorgesehen. Um das Einbringen in das Erdreich zu erleichtern, das den Boden 8 bildet, ist in dieser Variante ein Trittbrett 19 vorgesehen, das ähnlich des Tritts eines Spatens zum Einsatz des Körpergewichts des Anwenders 1 zum Einbringen in den Boden 8 dient.

Dieses Trittbrett 19 kann zusätzlich während des Aufnahmeverfahrens A als Aufstandsfläche für den Anwender 1 dienen, um ein Gegengewicht zur Verschwenkung durch den Anwender 1 in einem der Verfahrensschritte V3, V3', V4, V4' bereitstellen zu können oder die Aufnahmevorrichtung 2 zu fixieren. Dadurch kann das Ausreißen des Fußpunkts verhindert werden.

Ein Gelenk G zwischen einem ersten Teil des Teleskopstabs 4 und eines zweiten Teils des Teleskopstabs 4 ist hier nur schematisch angedeutet. Dies kann mit jedem möglichen verschwenkbaren Gelenk gebildet werden. Das Gelenk kann entweder als ein kraftfreies Gelenk oder federvorgespanntes Gelenk ausgeführt sein.

In dieser Figur ist die Aufnahmevorrichtung 2 einmal in einer ersten Höhe H1 gezeigt und strichliert in einer zweiten Höhe H2 zur zweiten Messung im Verfahrensschritt V4 oder V4'.

Der Laserscanner 6 kann in jeder Ausführung am oberen Ende 5b des Teleskopstabs 4 zentral beispielsweise in Verlängerung des Teleskopstabs 4 angeordnet sein, wie in Fig. 5 dargestellt ist oder exzentrisch von einer Teleskopstabachse 20 angeordnet sein, wie in Fig. 6 dargestellt ist.

In beiden Ausführungen sind IMU und Laserscanner 6 nah beieinander verbaut und sind derart miteinander und mit der Aufnahmevorrichtung 2 verbunden, dass sie sich im Wesentlichen nicht relativ zueinander bewegen können.

Vorzugsweise ist die IMU in einem Gehäuse mit dem Laserscanner 6 am Teleskopstab 4 angeordnet. Dabei ist auch möglich, dass der Laserscanner 6 und die IMU in einem Simultaneaous Localization and Mapping - Scanner (SLAM-Scanner) integriert sind. Zusätzlich kann noch ein Magnetometer vorgesehen oder Bestandteil der IMU sein.

Der Laserscanner 6 sendet in einem Kegel mit einem Öffnungswinkel γ in zumindest einer Ebene von einigen wenigen Grad - beispielsweise 45° nach oben und unten von einer Normalen auf einen Laserscanneraustritt - bis zu 180° oder in Sphären rundum. Solid-State-Scanner können beispielsweise einen Bereich von 30°x120° oder 30°x50° erfassen. In Fig. 6 beträgt der Öffnungswinkel γ etwa 90°.

Es besteht auch die Möglichkeit einen Laserscanner 6 an dem oberen Ende 5b in zwei Richtungen rotieren zu lassen, sodass die gesamte Sphäre abgescannt werden kann.

Durch die exzentrische Anordnung gemäß Fig. 6, wird die Aufnahmerichtung 2 durch das Gewicht der IMU und des Laserscanners 6 besser vorgegeben. Dies wird dadurch erreicht, dass der Teleskopstab 4 frei um seine Teleskopstabachse 20 drehbar ist und das geringfügig exzentrisch angebrachte Gewicht des Laserscanners 6 und der IMU den Teleskopstab 4 dazu bringen sich so zu drehen, dass die IMU und der Laserscanner 6 immer nach außen und unten gerichtet sind. Dadurch ist die Aufnahmerichtung meistens nach außen und schräg nach unten gerichtet. Dies ermöglicht die optimale Aufnahme des Waldbestands 7 und des Bodens 8 um die Aufnahmevorrichtung 2 bei Durchführung der Verschwenkung in einem der Verfahrensschritte V3, V3', V4, V4'.

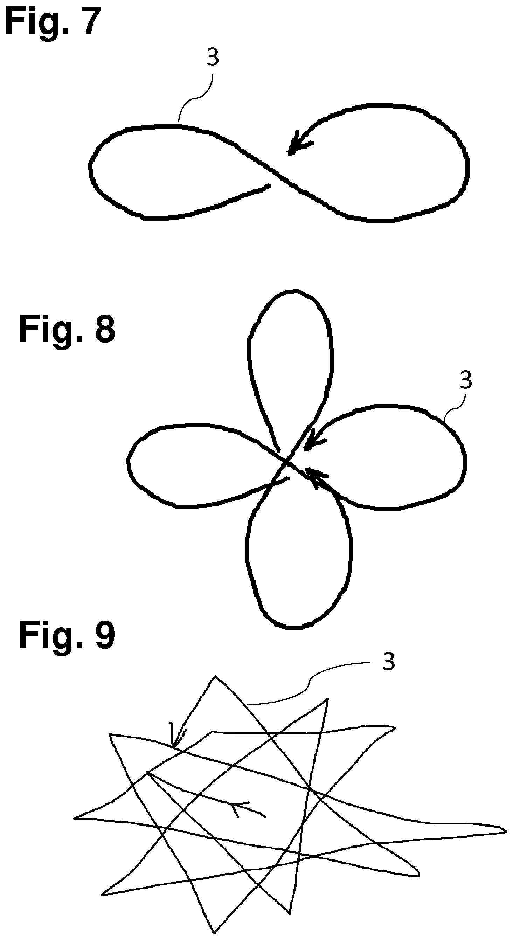

Fig. 7 bis Fig. 9 zeigen mögliche Bahnen 3, wobei den Möglichkeiten bei den Bahnen 3 keine Grenzen gesetzt sind. So ist jede Form, die Erstreckungen in zumindest zweier Raumrichtungen aufweist möglich, die ungleich Null sind, und die möglichst unregelmäßig sind. So ist ein Kreis nicht als Bahn 3 für das Verfahren geeignet.

Fig. 8 zeigt eine Lemniskate als Bahn 3, Fig. 9 zeigt eine Bahn 3 bei der die Lemniskate aus Fig. 8 weitergeführt wird in einer weiteren Lemniskate. Die zweite Figur ist hier um 90° gegenüber der ersten Figur verdreht für Verfahrensschritt V3' oder V4'. In Fig. 9 ist demonstriert, dass z.B. im Fall von Platzmangel, eine sehr beliebig durchfahrene Bahn 3 ebenfalls zu brauchbaren Aufnahmen führt. Es ist auch eine blumenförmige Bahn 3 denkbar.

In einer verbesserten Ausführung ist neben dem Laserscanner 6 eine Kamera verortet. Die Aufnahmebereiche von Laserscanner 6 und Kamera entsprechen einander vorteilhafterweise. Durch die Kamera ist es möglich Farben während der Aufnahmen aufzuzeichnen und diese später mit der Punktwolke zu überlagern. Dies ermöglicht es visuell ansprechende und in RGB eingefärbte dreidimensionale Aufnahmen des Waldbestands zu erhalten. Weiters können durch die Kamera weitere Informationen gewonnen werden. So könnten die Art des Baumes 7a, Schädlinge, Wildverbiss und Krankheiten erkannt werden. Dies kann durch eine künstliche Intelligenz (KI) durchgeführt werden. Dabei werten Anwender die Aufnahmen über längere Zeiträume hinweg aus. Bei Auswertung der Bilder durch einen Menschen werden Informationen zu den Aufnahmen eingetragen. Durch diese Vorgehensweise kann die KI lernen und diese Informationen in Zukunft selbst auswerten.

Stammerkennung und Baumartenerkennung kann durch Vergleich mit den Kameradaten und den Aufnahmen vom Laserscanner 6 realisiert werden.

Die Aufnahmen der Kamera werden zeitgleich zur Punktwolke von dem Laserscanner 6 aufgenommen. Die Kamera und ein Solid-State-Laserscanner 6 weisen beispielsweise beide einen 30°x50° großen Öffnungswinkel auf und können synchron denselben Ausschnitt aufnehmen.

Entlang des Teleskopstabs 4 oder am unteren Ende 5a können ein Prozessor, ein Datenspeicher, ein Energiespeicher zur Versorgung der Aufnahmevorrichtung 2 mit Energie und Anderes befestigt sein. Diese Komponenten sind im günstigsten Fall über ein - vorzugsweise mehrpoliges - Spiralkabel mit der optionalen Kamera, der IMU und dem Laserscanner 6 verbunden.

Um besonders einfach eine Aufnahmevorrichtung 2 zu erhalten kann ein Smartphone vorgesehen sein, das den zumindest einen Laserscanner 6 und die IMU aufweist und in einer Halterung am oberen Ende 5b des Teleskopstabs 4 der Aufnahmevorrichtung 2 angeordnet wird.

Um besonders einfache Art und Weise eine haptische Rückmeldung durch die Aufnahmevorrichtung 2 zu erreichen, kann die Eigenfrequenz oder Eigenmode genau bei Verschwenkung mit der optimalen Mess-/oder Aufnahmegeschwindigkeit durchfahren werden. Dies kann beispielsweise durch die Federkonstante des Gelenks G; 14 oder 17 eingestellt werden oder eine optional vorgesehenen Drehfeder gegen die Verschwenkung beeinflusst werden. Dazu kann auch eine Dämpfung der Schwenkbewegung vorgesehen werden.

Die Federkraft eines Federelements kann aber auch so bemessen sein, dass eine kraftsparende und vorteilhafte Bewegung des Teleskopstabs 4 bestmöglich unterstützt wird.

In weiteren Ausbildungen der Aufnahmevorrichtung 2 ist bevorzugterweise am oberen Ende 5b des Teleskopstabs 4 zur Bewegung des Laserscanners 6 in Relation zum Teleskopstab 4 ein Kugellager, ein Rollenlager, ein Gleitlager oder Ähnliches vorgesehen, und/oder ein solches Lager am unteren Ende 5a des Teleskopstabs 4 vorgesehen, das eine leichte Verdrehung des Teleskopstabs 4 gegen die Verankerung zulässt.

Das Gelenk G; 14 oder 17 der Aufnahmevorrichtung 2 ist günstigerweise in allen Ausführungen möglichst niedrig am Teleskopstab 4 angeordnet, um eine möglichst große freie Länge zur Verschwenkung gegenüber dem unteren Ende 5a nutzen zu können.

Auch der Gummipfropfen, der zur Verankerung 10 eingesetzt wird, stellt ein Gelenk zur Verschwenkung dar, ähnlich dem elastischen Element 17.

In einer besonderen Version ist ein Griff oder eine Manschette für ergonomisches Halten für den Anwender 1 am Teleskopstab 4 vorgesehen.

Die exakte Position für Aufnahmeserien, die üblicherweise zu unterschiedlichen Zeitpunkten vom selben Punkt aus im Waldbestand aufgenommen werden, können beispielsweise durch ein Stahlrohr im Boden 8 oder eine andere Markierung gekennzeichnet werden, um das wiederholte Auffinden zu erleichtern. Dadurch werden die Aufnahmen exakt immer von diesem Punkt aus abgearbeitet und so ein Fehler vermieden. Der Durchmesserzuwachs kann auf diese Art und Weise durch mehrmalige Messung zu unterschiedlichen Zeitpunkten exakt ermittelt werden.

Der Ort des Laserscanners 6, also seine absolute und relative Position werden mithilfe von SLAM-Methoden bestimmt und beispielsweise durch sogenanntes Plane-to-Plane Matching bestimmt.

Alternativ dazu wird ein im Waldbestand 7 besonders vorteilhafter SLAM-Algorithmus eingesetzt, der anstatt des üblichen Plane-to-Plane-Matchings, ein Matching zwischen Stammachsen oder Ast-Achsen vorsieht, da ebene Objekte im Wald sehr selten anzutreffen sind.

Es kann zur weiteren Erhöhung der Genauigkeit zusätzlich ein Sensor bestimmt sein, der den Winkel der Verschwenkung abgreift und diese Information so zur genauen Positionsbestimmung des Laserscanners 6 herangezogen wird.

Eine mögliche günstige Verschwenkungsgeschwindigkeit ist 90° pro Sekunde bzw. 1 Meter pro Sekunde in Bezug auf die Scaneinheit, um den Waldbestand 7 für eine ausreichende Punktdichte zu erfassen.

Eine Auswertung der Punktwolke hinsichtlich einer Objekt-Extraktion in Echtzeit ist derzeit aufgrund der immensen Datenmenge noch nicht möglich. Eine dem Fachmann bekannte Software verarbeitet erst nach Übergabe die Rohdaten der Aufnahme.

Derartige SLAM-Scanner-Software zur Umwandlung der Punktwolke am PC oder einem anderen Rechner ist bekannt. Die Rohdaten vom Laserscanner 6 werden an den PC übergeben und von Software in dreidimensionale Kartendaten umgewandelt.

GNSS ist für die Aufnahmevorrichtung 2 von Vorteil, da eine GNSS-Antenne gute Mittelwerte für die Position ermitteln.

SLAM-Algorithmen können zusätzlich auch aus den Videobildern der Kamera die Bewegung des Laserscanners 6 herleiten.

## Patentansprüche

1. Aufnahmevorrichtung (2) zur Erfassung eines Waldbestands (7), die einen Teleskopstab (4) umfasst, an dem zumindest ein Laserscanner (6) angeordnet ist, wobei der Laserscanner (6) an einem oberen Ende (5b) des Teleskopstabs (4) verortet ist und eine Verankerung (10) an einem gegenüberliegenden unteren Ende (5a) des Teleskopstabs (4) vorgesehen ist, wobei die Verankerung (10) dazu eingerichtet ist, die Aufnahmevorrichtung (2) in einem Boden (8) zu befestigen, wobei die Aufnahmevorrichtung (2) eine inertiale Messeinheit, IMU, aufweist und die IMU am oberen Ende (5b) des Teleskopstabs (4) in zueinander im Wesentlichen spielloser Anordnung mit dem Laserscanner (6) vorgesehen ist, **dadurch gekennzeichnet, dass** der Teleskopstab (4) zumindest ein Gelenk (G; 14; 17) aufweist, das zur Verschwenkung des oberen Endes (5b) des Teleskopstabs (4) mit dem Laserscanner (6) gegenüber der Verankerung (10) dient.

2. Aufnahmevorrichtung (2) nach Anspruch 1, **dadurch gekennzeichnet, dass** das Gelenk (G; 14; 17) ein Kugelgelenk (14), ein Kreuzgelenk und/oder ein Federelement (17) und/oder ein Radiallager aufweist.

3. Aufnahmevorrichtung (2) nach einem der Ansprüche 1 oder 2, **dadurch gekennzeichnet, dass** der Teleskopstab (4) eine Länge (L) - vorzugsweise in einem ausgezogenen Zustand - von zumindest 3 m aufweist, vorzugsweise eine Länge (L) von zumindest 5 m aufweist.

4. Aufnahmevorrichtung (2) nach einem der Ansprüche 1 bis 3, **dadurch gekennzeichnet, dass** am oberen Ende (5b) des Teleskopstabs (4) neben dem Laserscanner (6) eine Kamera vorgesehen ist, wobei der Laserscanner (6) und die Kamera vorzugsweise jeweils einen Aufnahmebereich erfassen, wobei die beiden Aufnahmebereiche einander im Wesentlichen entsprechen.

5. Aufnahmevorrichtung (2) nach einem der Ansprüche 1 bis 4, **dadurch gekennzeichnet, dass** die Aufnahmevorrichtung (2) zu Messaufnehmern zusätzliche Komponenten aufweist, wobei diese zusätzlichen Komponenten beispielsweise ein Prozessor, ein Datenspeicher, ein Energiespeicher zur Versorgung der Aufnahmevorrichtung (2) mit Energie und Ähnliches sind, wobei die Messaufnehmer Kamera, Laserscanner (6) und IMU sind.

6. Aufnahmevorrichtung (2) nach einem der Ansprüche 1 bis 5, **dadurch gekennzeichnet, dass** der Teleskopstab (4) in Leichtbauweise - vorzugsweise mit CFK - Rohren - ausgeführt ist.

7. Aufnahmevorrichtung (2) nach einem der Ansprüche 1 bis 6, **dadurch gekennzeichnet, dass** die Verankerung (10) eine - vorzugsweise abnehmbare - Spitze zum Einbringen in den Boden (8) aufweist, oder die Verankerung (10) derart ausgebildet ist, dass sie, - vorzugsweise über einen Bajonettverschluss, einen Schnappverschluss, ein Gewinde (12, 13) oder einen Gummipfropfen,- mit einem Gegenstück im Boden (8) verbindbar ist.

8. Aufnahmevorrichtung (2) nach einem der Ansprüche 1 bis 7, **dadurch gekennzeichnet, dass** die Aufnahmevorrichtung eine Sendeeinhet zur Übermittlung von Aufnahmen von der Sendeeinheit an einen von dem Laserscanner (6) entfernt angeordneten Empfänger umfasst.

9. Aufnahmevorrichtung (2), nach einem der Ansprüche 1 bis 8, **dadurch gekennzeichnet, dass** die Aufnahmevorrichtung einen Prozessor und mindestens ein Signalelement umfasst, wobei die IMU und der Prozessor verbunden sind und der Prozessor mit dem zumindest einen Signalelement verbunden ist, wobei das Signalelement zur Ausgabe eines - vorzugsweise akustischen oder haptischen - Feedbacks vorgesehen ist.

10. Aufnahmevorrichtung (2) nach einem der Ansprüche 1 bis 9, **dadurch gekennzeichnet, dass** die Aufnahmevorrichtung ein Smartphone in einer Halterung am Ende des Teleskopstabs (4) der Aufnahmevorrichtung (2) umfasst, wobei das Smartphone den zumindest einen Laserscanner (6) und die IMU aufweist.

11. Aufnahmeverfahren (A) zur Erfassung eines Waldbestands (7) mit einer Aufnahmevorrichtung (2) nach einem der Ansprüche 1 bis 10, zumindest folgende Schritte umfassend:
a. Einbringen der Verankerung (10) in einen Boden (8);
b. Fassen des Teleskopstabs (4) durch einen Anwender (1);
c. Durchführen einer Messung mit dem Laserscanner (6) in einer ersten Höhe (H1), wobei das obere Ende der Aufnahmevorrichtung (2) verschwenkt wird, sodass das obere Ende (5b) des Teleskopstabs (4) mit dem Laserscanner (6) zumindest eine Figur beschreibt, wobei die Figur unregelmäßig oder zumindest nicht kreisförmig ist, wobei die Aufnahmevorrichtung (2) vorzugsweise derart verschwenkt wird, dass das obere Ende (5b) mit dem Laserscanner (6) eine im Wesentlichen achterförmige Bahn (3) beschreibt.

12. Aufnahmeverfahren (A), nach Anspruch 11, **dadurch gekennzeichnet, dass** während der Messung das obere Ende (5b) des Teleskopstabs (4) derart verdreht wird, dass sich die mit dem oberen Ende (5b) des Teleskopstabs (4) beschriebene Figur verändert.

13. Aufnahmeverfahren (A) nach Anspruch 11 oder 12, **dadurch gekennzeichnet, dass** zumindest eine weitere Messung auf einer weiteren Höhe (H2) durchgeführt wird, die unterschiedlich zur ersten Höhe (H1) ist, wobei dazu vorzugsweise die Länge (L) des Teleskopstabs (4) verändert wird.

14. Aufnahmeverfahren (A), nach einem der Ansprüche 11 bis 13, **dadurch gekennzeichnet, dass** die IMU in Echtzeit ausgewertet wird und ein Feedback ausgegeben wird - vorzugsweise akustisch oder haptisch - dass die Brauchbarkeit der Aufnahmen für den Anwender (1) signalisiert, und dem Anwender (1) zeigt, ob die Verschwenkung zu schnell oder zu langsam ausgeführt wird.

15. Aufnahmeverfahren (A), nach einem der Ansprüche 11 bis 14, **dadurch gekennzeichnet, dass** eine Lokalisierung des Laserscanners (6) durchgeführt wird, vorzugsweise durch SLAM-Algorithmen unter Nutzung der Auswertung der IMU.

## Claims

1. Recording device (2) for detecting a forest stand (7), comprising a telescopic rod (4) on which at least one laser scanner (6) is arranged, wherein the laser scanner (6) is located at an upper end (5b) of the telescopic rod (4) and an anchorage (10) is provided at an opposite lower end (5a) of the telescopic rod (4), wherein the anchorage (10) is designed to secure the recording device (2) in a ground (8), wherein the recording device (2) has an inertial measuring unit, IMU, and the IMU is provided at the upper end (5b) of the telescopic rod (4) in a substantially play-free arrangement with the laser scanner (6), **characterised in that** the telescopic rod (4) has at least one joint (G; 14; 17) which serves to pivot the upper end (5b) of the telescopic rod (4) with the laser scanner (6) relative to the anchorage (10).

2. Recording device (2) according to claim 1, **characterised in that** the joint (G; 14; 17) comprises a ball joint (14), a cross joint and/or a spring element (17) and/or a radial bearing.

3. Recording device (2) according to one of claims 1 or 2, **characterised in that** the telescopic rod (4) has a length (L) - preferably in an extended state - of at least 3 m, preferably a length (L) of at least 5 m.

4. Recording device (2) according to one of claims 1 to 3, **characterised in that** a camera is provided at the upper end (5b) of the telescopic rod (4) adjacent to the laser scanner (6), wherein the laser scanner (6) and the camera preferably each detect a recording area, wherein the two recording areas essentially correspond to each other.

5. Recording device (2) according to one of claims 1 to 4, **characterised in that** the recording device (2) has additional components to the measuring sensors, wherein these additional components are, for example, a processor, a data memory, an energy storage device for supplying the recording device (2) with energy, and the like, wherein the measuring sensors are a camera, a laser scanner (6) and an IMU.

6. Recording device (2) according to one of claims 1 to 5, **characterised in that** the telescopic rod (4) is of lightweight construction, preferably with CFRP tubes.

7. Recording device (2) according to one of claims 1 to 6, **characterised in that** the anchorage (10) has a - preferably removable - tip for insertion into the ground (8), or the anchorage (10) is designed such that it can be connected to a counterpart in the ground (8), preferably via a bayonet lock, a snap lock, a thread (12, 13) or a rubber plug.

8. Recording device (2) according to one of claims 1 to 7, **characterised in that** the recording device comprises a transmitting unit for transmitting recordings from the transmitting unit to a receiver arranged at a distance from the laser scanner (6).

9. Recording device (2) according to one of claims 1 to 8, **characterised in that** the recording device comprises a processor and at least one signal element, wherein the IMU and the processor are connected and the processor is connected to the at least one signal element, wherein the signal element is provided for outputting feedback, preferably an acoustic or haptic feedback.

10. Recording device (2) according to one of claims 1 to 9, **characterised in that** the recording device comprises a smartphone in a holder at the end of the telescopic rod (4) of the recording device (2), wherein the smartphone has the at least one laser scanner (6) and the IMU.

11. Recording method (A) for recording a forest stand (7) with a recording device (2) according to one of claims 1 to 10, comprising at least the following steps of:
a. inserting the anchorage (10) into the ground (8);
b. gripping the telescopic rod (4) by a user (1);
c. performing a measurement with the laser scanner (6) at a first height (H1), wherein the upper end of the recording device (2) is pivoted so that the upper end (5b) of the telescopic rod (4) describes at least one figure with the laser scanner (6), wherein the figure is irregular or at least not circular, wherein the recording device (2) is preferably pivoted such that the upper end (5b) describes a substantially figure-eight path (3) with the laser scanner (6).

12. Recording method (A) according to claim 11, **characterised in that** during the measurement, the upper end (5b) of the telescopic rod (4) is rotated such that the figure described by the upper end (5b) of the telescopic rod (4) changes.

13. Recording method (A) according to claim 11 or 12, **characterised in that** at least one further measurement is carried out at a further height (H2) which is different from the first height (H1), wherein the length (L) of the telescopic rod (4) is preferably changed for this purpose.

14. Recording method (A) according to one of claims 11 to 13, **characterised in that** the IMU is evaluated in real time and feedback is provided - preferably acoustically or haptically - which signals the usability of the recordings to the user (1) and shows the user (1) whether the pivoting is being performed too quickly or too slowly.

15. Recording method (A), according to one of claims 11 to 14, **characterised in that** a localization of the laser scanner (6) is carried out, preferably by SLAM algorithms using the evaluation of the IMU.

## Revendications

1. Dispositif (2) d'enregistrement pour la saisie d'un peuplement (7) forestier, qui comprend une barre (4) télescopique, sur laquelle au moins un scanner (6) laser est monté, dans lequel le scanner (6) laser est situé à un bout (5b) supérieur de la barre (4) télescopique et un ancrage (10) est prévue à un bout (5a) inférieur opposé de la barre (4) télescopique, dans lequel l'ancrage (10) est agencé pour fixer le dispositif (2) d'enregistrement dans un sol (8), dans lequel le dispositif (2) d'enregistrement a une unité de mesure inertielle, IMU, et l'IMU est prévu au bout (5b) supérieur de la barre (4) télescopique suivant un montage avec le scanner (6) laser l'un par rapport à l'autre sensiblement sans jeu, **caractérisé en ce que** la barre (4) télescopique a au moins une articulation (G ; 14 ; 17), qui sert à faire pivoter le bout (5b) supérieur de la barre (4) télescopique ayant le scanner (6) laser par rapport à l'ancrage (10).

2. Dispositif (2) d'enregistrement suivant la revendication 1, **caractérisé en ce que** l'articulation (G ; 14 ; 17) est une articulation (14) à rotule, une articulation à croisillon et/ou un élément (17) de ressort et/ou un palier radial.

3. Dispositif (2) d'enregistrement suivant l'une des revendications 1 ou 2, **caractérisé en ce que** la barre (4) télescopique a une longueur (L) - de préférence à l'état déployé - d'au moins 3 m, de préférence une longueur (L) d'au moins 5 m.

4. Dispositif (2) d'enregistrement suivant l'une des revendications 1 à 3, **caractérisé en ce qu'**il est prévu au bout (5b) supérieur de la barre (4) télescopique outre le scanner (6) laser, un appareil photographique dans lequel le scanner (6) laser et l'appareil photographique, prennent de préférence respectivement une zone d'enregistrement, dans lequel les deux zones d'enregistrement se correspondent sensiblement l'une à l'autre.

5. Dispositif (2) d'enregistrement suivant l'une des revendications 1 à 4, **caractérisé en ce que** le dispositif (2) d'enregistrement a des composants supplémentaires à des enregistreurs de mesure, dans lequel ces composants supplémentaires sont par exemple un processeur, une mémoire de données, un accumulateur d'énergie pour l'alimentation du dispositif (2) d'enregistrement en énergie électrique et analogue, dans lequel les enregistreurs de mesure sont des appareils photographiques, des scanners (6) laser et des IMU.

6. Dispositif (2) d'enregistrement suivant l'une des revendications 1 à 5, **caractérisé en ce que** la barre (4) télescopique est réalisée en tube, en mode de construction léger - de préférence par de la matière plastique renforcée par de la fibre.

7. Dispositif (2) d'enregistrement suivant l'une des revendications 1 à 6, **caractérisé en ce que** l'ancrage (10) a une pointe - de préférence pouvant être enlevée - à mettre dans le sol (8) ou l'ancrage (10) est constitué de manière à pouvoir être assemblé - de préférence par une fermeture à baïonnette, une fermeture à déclic, un filetage (12, 13) ou un tampon en caoutchouc - à une pièce antagoniste dans le sol (8).

8. Dispositif (2) d'enregistrement suivant l'une des revendications 1 à 7, **caractérisé en ce que** le dispositif d'enregistrement comprend une unité d'émission pour la transmission d'enregistrements de l'unité d'émission à un récepteur monté loin du scanner (6) laser.

9. Dispositif (2) d'enregistrement suivant l'une des revendications 1 à 8, **caractérisé en ce que** le dispositif d'enregistrement comprend un processeur et au moins un élément de signal, dans lequel l'IMU et le processeur sont reliés et le processeur est relié au au moins un élément de signal, dans lequel l'élément de signal est prévu pour l'émission d'une réaction - de préférence acoustique ou haptique.

10. Dispositif (2) d'enregistrement suivant l'une des revendications 1 à 9, **caractérisé en ce que** le dispositif d'enregistrement comprend un téléphone intelligent dans une fixation au bout de la barre (4) télescopique du dispositif (2) d'enregistrement, dans lequel le téléphone intelligent a le au moins un scanner (6) laser et l'IMU.

11. Procédé (A) d'enregistrement pour la saisie d'un peuplement (7) forestier par un dispositif (2) d'enregistrement suivant l'une des revendications 1 à 10, comprenant au moins les stades suivants :
a. enfoncement de l'ancrage (10) dans un sol (8) ;
b. montage de la barre (4) télescopique par un utilisateur (1) ;
c. exécution d'une mesure par le scanner (6) laser à un premier niveau (H1), dans lequel on fait pivoter l'extrémité supérieure du dispositif (2) d'enregistrement, de manière à ce que le bout (5b) supérieur de la barre (4) télescopique ayant le scanner (6) laser décrive au moins une figure, dans lequel la figure est irrégulière ou du moins n'est pas circulaire, dans lequel on fait pivoter de préférence le dispositif (2) d'enregistrement, de manière à ce que le bout (5b) supérieur ayant le scanner (6) laser décrive une trajectoire (3) sensiblement en forme de huit.

12. Procédé (A) d'enregistrement suivant la revendication 11, **caractérisé en ce que**, pendant la mesure, on fait tourner le bout (5b) supérieur de la barre (4) télescopique de manière à modifier la figure décrite par le bout (5b) supérieur de la barre (4) télescopique.

13. Procédé (A) d'enregistrement suivant la revendication 11 ou 12, **caractérisé en ce que** l'on effectue au moins une autre mesure à un autre niveau (H2), qui est différent du premier niveau (H1), dans lequel on modifie à cet effet de préférence la longueur (L) de la barre (4) télescopique.

14. Procédé (A) d'enregistrement suivant l'une des revendications 11 à 13, **caractérisé en ce que** l'on exploite l'IMU en temps réel et on sort une réaction - de préférence acoustique ou haptique - qui signale à l'utilisateur (1) la possibilité d'utiliser l'enregistrement et qui indique à l'utilisateur (1) si le pivotement est exécuté trop rapidement ou trop lentement.

15. Procédé (A) d'enregistrement suivant l'une des revendications 11 à 14, **caractérisé en ce que** l'on effectue une localisation du scanner (6) laser de préférence par des algorithmes SLAM en utilisant l'exploitation de l'IMU.
